# EUROPÄISCHE PATENTSCHRIFT

(11) **EP 0 502 322 B1**
(45) Veröffentlichungstag und Bekanntmachung des Hinweises auf die Patenterteilung: **27.07.1994**
(21) Anmeldenummer: 92101668.9
(22) Anmeldetag: 01.02.1992
(51) Int. Cl.: B60S 1/52

(54) **Scheibenwascheinrichtung mit einem Halteteil zu deren Befestigung**
Windscreen washing arrangement with a fastening device for mounting of same
Dispositif de lavage de pare-brise avec un dispositif de retenu pour sa fixation

(30) Priorität: 05.03.1991 DE 4106865
(43) Veröffentlichungstag der Anmeldung: 09.09.1992
(73) Patentinhaber: MERCEDES-BENZ AG, 70327 Stuttgart (DE); VDO Adolf Schindling AG, D-60487 Frankfurt (DE)
(72) Erfinder: Schacher, Ralf, W-7030 Böblingen 4 (DE); Pfeiffer, Martin, Dipl.-Ing., W-7000 Stuttgart 80 (DE); Vogt, Gerhard, W-6440 Bebra-Breitenbach (DE); Sieber, Roland, W-6442 Rotenburg (Fulda) (DE)

(56) Entgegenhaltungen:
- EP-A- 0 174 521
- EP-A- 0 353 643
- DE-A- 2 945 860
- PATENT ABSTRACTS OF JAPAN vol. 8, no. 136 (M-304)(1573) 23. Juni 1984; & JP-A-59 034965 (Nissan) 25. Februar 1984

## Beschreibung

Die Erfindung bezieht sich auf eine Scheibenwascheinrichtung mit einem Halteteil zu deren Befestigung mit den Merkmalen des Oberbegriffs des Patentanspruchs 1. Es ist bekannt (DT-AS 1 804 576), eine nicht beheizbare Scheibenwaschdüse in einer Ausnehmung einer Fahrzeug-Motorhaube rastend zu befestigen, wozu an einen Zuleitungsrohrstutzen der Düse ein einseitig angespritztes Einhängemaul sowie eine diesem gegenüberliegende federnde Haltezunge angeformt sind. Der pilzförmige Düsenkörper kann von außen in die die Außenhaut des Fahrzeugs durchdringende Ausnehmung eingesteckt und mittels der erwähnten Rastmittel darin festgelegt werden, wobei der die Düsenöffnung umfassende Pilzkopf oberhalb der Außenhaut sichtbar bleibt.

Es ist bekannt (DE 29 45 860 A1), eine ebenfalls nicht beheizbare Scheibenwaschdüse in einem unterhalb der Motorhaube bzw. der Fahrzeugaußenhaut verlaufenden Luftkanal anzuordnen. Mit dieser Anordnung kann zum einen eine glatte Oberseite der Motorhaube des Fahrzeugs ohne störende Düsenköpfe verwirklicht werden, zum anderen sind die geschützt untergebrachten Düsen wenig verschmutzungsanfällig. Außerdem bleiben nach dem Scheibenwaschen keine Wassertropfen bzw. -flecken auf der Motorhaube zurück.

In der genannten Druckschrift wird allerdings die Art der Befestigung der Scheibenwaschdüsen nicht näher beschrieben.

Es ist ferner eine Anordnung bekannt (DE 29 43 887 A1), bei der die Scheibenwaschdüsen in besonders unauffälliger Anordnung als radiale Austrittsöffnungen eines Hohlkanals ausgeführt sind, dessen Wandung die scheibennahe Abschlußkante einer im vorderen Bereich des Fahrzeugs vorgesehenen Klappe oder Haube bildet.

Auch ist es bekannt (DE 33 24 268 A1), in einer Scheibenwascheinrichtung ein Heizelement sowie einen Wärmeleiter für die Düse vorzusehen, welcher in eine Zulaufbohrung der Düse hineinragt. Zwar ist damit ein besonders guter Wärmeübergang auf die Waschflüssigkeit möglich, jedoch muß die Durchführung des Wärmeleiters in die Zulaufbohrung abgedichtet werden.

Schließlich ist es bekannt (DE 26 56 945 C2), eine Scheibenwaschdüse mit einem federbelasteten Rückschlagventil mit Saugwirkung zu versehen, um Waschwasser, das sich nach Abschluß eines Waschvorgangs noch in unmittelbarer Nähe der Austrittsöffnung der Spritzdüse befindet, selbsttätig in den Düsenkörper zurückzusaugen, und so ein Einfrieren der Austrittsöffnung zu vermeiden.

Aus stilistischen Gründen ist es wünschenswert, die Scheibenwaschdüsen eines Fahrzeugs möglichst unauffällig anordnen zu können, wobei diese Anordnung aber nicht auf Kosten der Montierbarkeit und ggf. Wartung gehen darf.

Die Erfindung hat die Aufgabe, eine gattungsgemäße Scheibenwascheinrichtung mit einem Halteteil zu deren Befestigung so auszubilden, daß sie besonders betriebssicher ist und auch leicht befestigt und möglichst unauffällig untergebracht werden kann.

Diese Aufgabe wird mit den kennzeichnenden Merkmalen des Patentanspruchs 1 erfindungsgemäß gelöst.

Die kennzeichnenden Merkmale der Unteransprüche geben vorteilhafte Weiterbildungen der erfindungsgemäßen Scheibenwascheinrichtung an.

Weitere Einzelheiten und Vorteile gehen aus der Zeichnung eines Ausführungsbeispiels und deren sich hier anschließender eingehender Beschreibung hervor.

Es zeigen
- Figur 1: eine Gesamtansicht der Scheibenwascheinrichtung in Einbaulage unterhalb einer Fahrzeugmotorhaube,
- Figur 2: ein Detail eines Halteteils der Scheibenwascheinrichtung,
- Figur 3: eine Ansicht des Halteteils in Blickrichtung III-III aus Figur 1,
- Figur 4: eine Ansicht der vormontierten Scheibenwascheinrichtung in gleicher Blickrichtung wie Figur 3,
- Figur 5: eine Ansicht einer Heizeinrichtung der Scheibenwascheinrichtung,
- Figur 5a: eine gegenüber Figur 5 um 90° geklappte Ansicht eines Details der Heizeinrichtung und
- Figur 6: einen Teilschnitt durch die Scheibenwascheinrichtung entsprechend der Schnittlinie VI-VI in Figur 4.

Vorab sei angemerkt, daß für gleiche Bauteile in allen Figuren gleiche Bezugszeichen verwendet wurden.

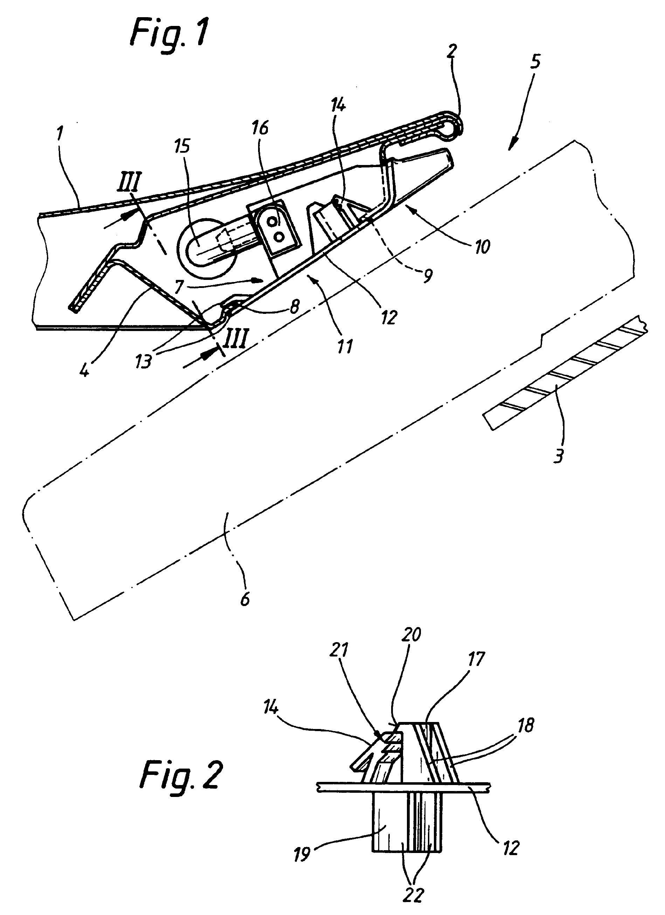

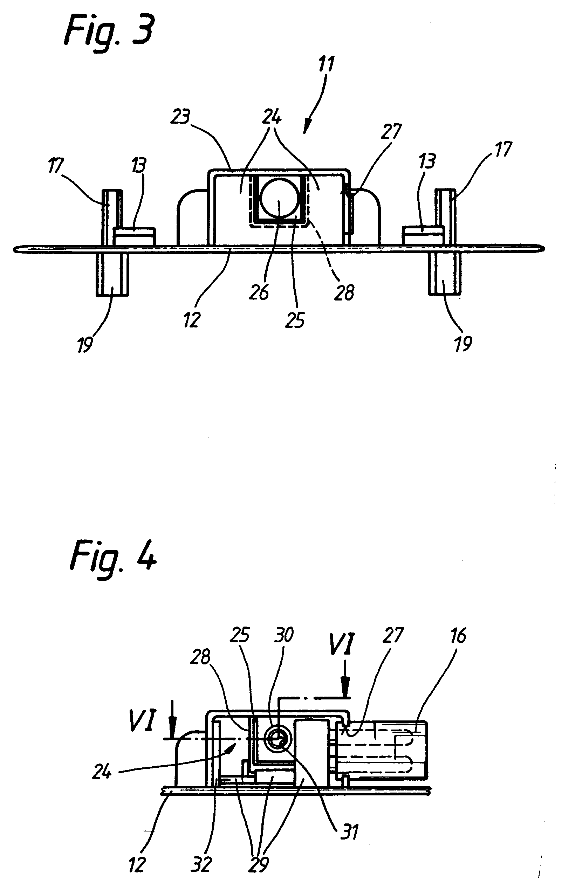

Gemäß **Figur 1** verläuft unterhalb einer Motorhaube 1, deren Oberseite ein Teil der Außenhaut eines nicht weiter dargestellten Fahrzeugs ist, nahe deren Abschlußkante 2 - die einer nur bruchstückhaft angedeuteten Windschutzscheibe 3 zugewandt ist - ein Versteifungsprofil 4 in einer zur Zeichnungsebene senkrechten Richtung. In einem Schacht 5 zwischen der Abschlußkante 2 und der Windschutzscheibe 3 ist außerdem noch ein Scheibenwischergetriebe 6 strichpunktiert angedeutet.
Die untere Begrenzungswand des hohlen Versteifungsprofils 4 hat eine Ausnehmung 7 mit einem vorderen Rand 8 und einem hinteren Rand 9 sowie auch zwei hier nicht sichtbaren, einander gegenüberliegenden seitlichen Rändern.
In die Ausnehmung 7 ist eine Scheibenwascheinrichtung 10 mittels eines Halteteils 11 eingesetzt. An eine Abdeckplatte 12 des Halteteils 11, die mit letzterem zur vollständigen Abdekkung der Ausnehmung 7 einstückig verbunden ist, sind einstückig als Halterungsmittel zwei - senkrecht zur Zeichnungsebene betrachtet hintereinanderliegende, vgl. Fig. 3 - in den vorderen Rand 8 der Ausnehmung 7 eingehängte Einhängemäuler 13 sowie Rastmittel mit zwei elastischen Rasthaken 14 angeformt, die mit dem hinteren Rand 9 der Ausnehmung 7 verrastet sind. Außen an dem Halteteil 11 sind ferner noch ein Zulaufanschluß 15 für Waschflüssigkeit sowie ein zweipoliger elektrischer Anschluß 16 für eine später noch näher beschriebene Heizeinrichtung vorgesehen. Der Waschflüssigkeitsaustritt befindet sich am rechten Ende der Scheibenwascheinrichtung 10. Nur dieses ist für den Fahrzeugbenutzer sichtbar. Die gezeigte Unterbringung der Scheibenwascheinrichtung innerhalb des freien Querschnitts des Versteifungsprofils schützt diese vorzüglich gegen Witterungseinflüsse (Schnee, Kälte) und trägt so zur sicheren Funktion der Scheibenreinigungsanlage des Fahrzeugs bei.

In einer Detailansicht zeigt **Figur 2** perspektivisch eine Vormontagestellung der Rastmittel des Halteteils 11. Wie auch aus Figur 1 bereits ersichtlich ist, steht dem elastischen Rasthaken 14 auf der gleichen (Ober-)Seite der Abdeckplatte 12 jeweils ein Bock 17 gegenüber, der durch schräge Rippen 18 gegen eine Biegung weg von dem Rasthaken 14 versteift ist. In der Vormontagestellung gemäß Figur 2 ist an die Unterseite der Abdeckplatte ein Ansatz 19 angeformt - jedoch mit dieser nur über einen dünnen Film in der Art eines Filmscharniers verbunden -der sich in der Endmontagestellung gemäß Figur 1 zwischen dem Rasthaken 14 und dem Bock 17 befindet, so daß dann die Unterseite der Abdeckplatte 12 glatt ist.

Zum Einbau der Scheibenwascheinrichtung 10 in die Ausnehmung 7 werden zunächst die Einhängemäuler 13 in deren vorderen Rand 8 eingehängt und dann die Rasthaken 14 unter vorübergehener elastischer Biegung in Richtung auf den jeweils gegenüberstehenden Bock 17 mit dem hinteren Rand 9 der Ausnehmung 7 verrastet.

Um die so erreichte Endmontagestellung der Scheibenwascheinrichtung 10 zu sichern, wird dann der jeweilige Ansatz 19 unter Zerstörung der erwähnten Filmverbindung mit der Abdeckplatte 12 zwischen den Rasthaken 14 und den Bock 17 eingetrieben, so daß der Rasthaken 14 nicht mehr zum Bock 17 hin gebogen werden bzw. ausweichen kann. Dabei wird der Ansatz 19 zwischen dem Rasthaken 14 und dem Bock 17 eingeklemmt. An dem Bock 17 ist eine Nase 20 vorgesehen, die als Endanschlag für den Ansatz 19 dient und sicherstellt, daß der Ansatz 19 nicht über seine Endstellung hinaus eingetrieben werden kann. Außerdem ist an dem Rasthaken 14 gegenüber der Nase 20 ein mit Sägezähnen versehener Abschnitt 21 vorgesehen, in welchen am Ansatz 19 verbleibende Reststücke der Filmverbindung zur Lagesicherung einrasten können. Hierdurch wird der Ansatz 19 bei eventuell auftretenden Toleranzen zusätzlich zur Klemmhalterung gegen Herausfallen gesichert.

Schließlich weist der Ansatz 19, wie ebenfalls aus Figur 2 ersichtlich, Führungsrippen 22 auf, so daß er in seiner Endstellung den Bock 17 an drei Seiten U-förmig umfaßt.

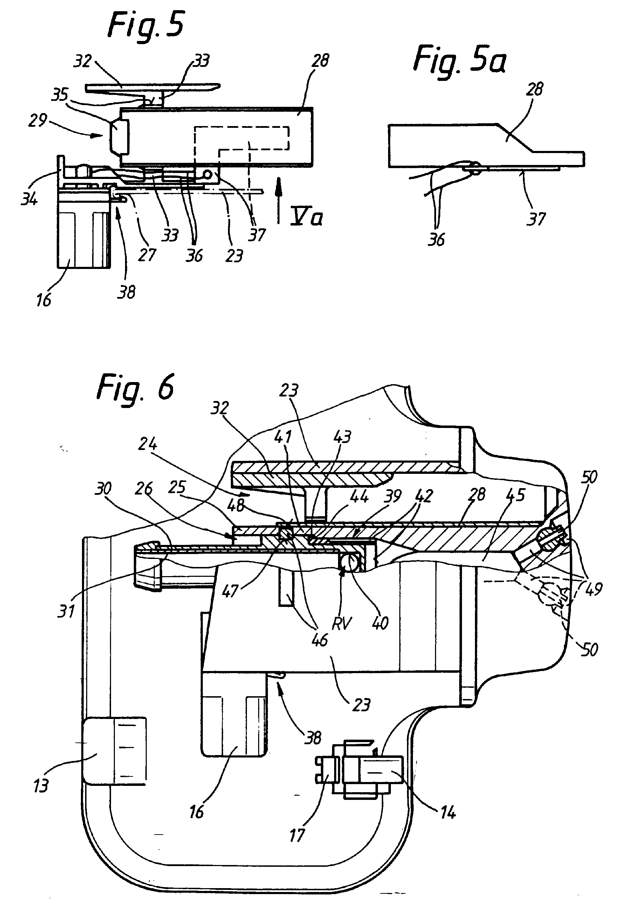

Eine andere Ansicht des als Kunststoffspritzteil gefertigten Halteteils 11 ohne Einbauten der Scheibenwascheinrichtung 10 in Blickrichtung III-III der Figur 1 ist in **Figur 3** dargestellt. Ein Gehäuse 23 ist mit der Abdeckplatte 12 einstückig verbunden und enthält einen U-förmigen, einseitig offenen Kanal 24, dessen Funktion noch beschrieben wird, sowie eine von den U-Schenkeln des Kanals 24 auf drei Wandseiten umfaßte Halterung 25 (Ventilkasten) für ein ebenfalls noch zu beschreibendes Rückschlagventil (RV; Fig. 6), die eine kreisrunde Tunnelbohrung 26 umfaßt. Diese Tunnelbohrung 26 bildet einen Teil des Zulaufs für die Spritzdüsen der Scheibenwascheinrichtung (Fig. 6). In seiner in der Zeichnung rechts gelegenen vertikalen Seitenwand hat das Gehäuse 23 eine Aussparung 27, in welche der elektrische Anschluß 16, wie in Figur 1 gezeigt, einsetzbar ist. Nur gestrichelt angedeutet zeigt Figur 3 auch die Einbaulage eines in den Kanal 24 eingeführten, aus dünnem Messingblech U-förmig gebogenen Wärmeleiters 28 (Fig. 4, 5), der die Halterung 25 auf ihren drei Wandseiten eng anliegend umfaßt. Das Gehäuse 23 hat einen rechteckigen Querschnitt, der sich, wie aus Figur 1 hervorgeht, von der in Figur 3 sichtbaren Öffnung zum Waschflüssigkeitsaustritt hin keilförmig verjüngt. Wie die Ausnehmung 7 selbst wird auch das Gehäuse 23 in der Endmontagestellung von der auf ihrer Unterseite glatten Abdeckplatte 12 vollständig abgedeckt und geschützt. Die Halterung 25 bzw. die Tunnelbohrung 26 verlaufen koaxial zu dem Kanal 24, dessen U-Schenkel die Halterung umgeben.

Die Befestigung des Wärmeleiters 28 geht noch besser aus **Figur** **4** hervor, welche in gleicher Blickrichtung wie Figur 3 die nunmehr voll mit dem Halteteil 11 vormontierte Scheibenwascheinrichtung 10 zeigt, wobei die Abdeckplatte 12 hier lediglich abgebrochen dargestellt ist. In das Gehäuse 23 ist hier ein Gehäuseinnenteil 29 eingesteckt, welches mit dem Wärmeleiter 28 und dem elektrischen Anschluß 16 fest verbunden ist (Fig. 5). In die Halterung 25 bzw. in deren nun verdeckte Tunnelbohrung 26 ist hier ein Rohranschlußstutzen 30 eingesteckt, der einen weiteren Teil des Zulaufs zu den Spritzdüsen der Scheibenwascheinrichtung 10 bildet und in welchen ein dünnwandiges Metallröhrchen 31, vorzugsweise aus Aluminium, zur Verbesserung der Wärmeübertragung in Achsrichtung des Rohranschlußstutzens 30 eingesetzt oder -gepreßt ist.

Die Untereinheit Gehäuseinnenteil/Heizeinrichtung ist noch einmal separat in **Figur 5** dargestellt. Das Gehäuseinnenteil 29 dient als Träger des Wärmeleiters 28, der eine beträchtliche Längenerstreckung hat. Einseitig hat es eine Abstützfläche 32, die sich eng an eine Innenwand des Gehäuses 23 anlegt und über einen Steg 33 mit der gegenüberliegenden elektrischen Anschlußseite 34 verbunden ist. Der Steg 33 hat Fortsätze 35, mit denen er den Wärmeleiter 28 teilweise umfaßt. In der Anschlußseite 34 des Gehäuseinnenteils sind zwei Anschlußstifte des elektrischen Anschlusses 16 festgelegt, die über je einen Draht 36 mit einem platten- und winkelförmig ausgeführten Flächen-Heizelement 37 verbunden sind. Hierbei handelt es sich um strahlungsvernetztes, elektrisch leitendes Polymer, welches oben und unten jeweils mit einer dünnen Elektrode ganzflächig laminiert ist. Die Materialeigenschaft dieses Polymers beinhaltet den PTC-("positive temperature coefficient"-)Effekt, der zur Selbstregelung der Heizleistung bzw. der Temperatur der Heizeinrichtung genutzt wird. Die Kunststoffolie ist in jeder beliebigen Form und Größe herstellbar.
Das Heizelement 37 ist in diesem Einsatzfall mit einem Schenkel auf den Wärmeleiter 28 aufgeklebt und so ausgelegt, daß die gesamte Scheibenwascheinrichtung 10 bis zu Temperaturen von -20° C funktionsfähig bleibt. An den anderen Schenkel sind oben und unten die beiden Drähte 36 an jeweils eine der Elektroden angelötet. Die Heizeinrichtung umfaßt mithin den elektrischen Anschluß 16, die Anschlußstifte und die Drähte 36, das Flächen-Heizelement 37 und den Blech-Wärmeleiter 28 sowie im weiteren Sinne auch das als Wärmeleiter dienende Aluminiumröhrchen 31.

Aus **Figur 5a** gehen als Details der Heizeinrichtung in einer geklappten Ansicht (a-a) aus Figur 5 noch die Lötverbindungen der beiden Drähte 36 mit dem Heizelement 37 und der Längsverlauf der Schenkel des U-förmigen Wärmeleiters 28 besser hervor. Deren Höhe ändert sich in einer schrägen Rampe, damit ihr niedererer Teil bis in den niedrigsten Abschnitt des keilförmigen Gehäuses 23 und damit weit in dessen aus dem Versteifungsprofil 4 in die Außenluft hinausragenden Teil eingeschoben werden kann.

Beim Anlegen der Fahrzeug-Bordspannung erwärmt sich das Flächen-Heizelement 37. Durch Wärmeleitung verteilt sich die Wärme gleichmäßig über den Messingblech-Wärmeleiter 28 auf die Halterung 25 und die in ihm befindlichen Elemente und die Waschflüssigkeit.
Der elektrische Anschluß 16 wird über eine Rastverbindung 38 in der Aussparung 27 des hier nur gestrichelt teilweise angedeuteten Gehäuses 23, das zu diesem Zweck einen Rastzahn hat, festgelegt; über die Anschlußstifte wird damit auch das Gehäuseinnenteil 29 fixiert. Dies ist aber lediglich eine zusätzliche Lagesicherung; die Passung zwischen dem U-förmigen Wärmeleiter 28 und der Halterung 25 ist zur Erzielung eines guten Wärmeübergangs durch Wärmeleitung sehr knapp, so daß der Wärmeleiter nur mit leichtem Druck aufgesteckt werden kann. Jedenfalls wurde mit der vorliegenden Konfiguration eine einfach steck- und verrastbare Einbaumöglichkeit für die Scheibenwascheinrichtung 10 geschaffen.

Deren vollständige Inneneinrichtung ist in der Teilschnittansicht des Gehäuses 23 gemäß **Figur 6** (Schnittverlauf VI-VI in Fig. 4) dargestellt. Die in dem Kanal 24 eng an die Halterung 25 angeschmiegte Einbaulage des Wärmeleiters 28 und die große Überdeckungslänge wird hier verdeutlicht. Der in die Tunnelbohrung 26 eingesteckte Rohranschlußstutzen 30 mit dem eingesetzten Aluminiumröhrchen 31 hat an seinem aus dem Gehäuse 23 herausragenden Ende außenseitig eine Verdickung, mit der ein aufgesteckter Zulaufschlauch zusätzlich gehalten wird, und ist an der in die Tunnelbohrung 26 hineingesteckten Stirnseite verschlossen. Er weist jedoch in einem Endabschnitt 39 seiner Mantelfläche nahe der verschlossenen Stirnseite mindestens eine Durchtrittsöffnung 40 auf - eine gegenüberliegende Durchtrittsöffnung ist aufgrund der Schnittdarstellung nicht sichtbar -, die von einem außen auf den Endabschnitt 39 bis zu einem außenseitigen Bund 41 des Rohranschlußstutzens 30 aufgezogenen Schlauchstück 42 verschlossen ist. Dieses ist aus einem hinreichend elastischen Material hergestellt, welches sich bei Druckbeaufschlagung durch Waschflüssigkeit aus der Durchtrittsöffnung 40 aufweiten und den Waschflüssigkeitsstrom passieren läßt. Die Kombination Durchtrittsöffnung 40 / Schlauchstück 42 bildet innerhalb des Zulaufs ein einfaches Rückschlagventil RV, welches verhindert, daß Waschwasser aus dem Zulauf der Scheibenwascheinrichtung 10 auf das niederere Niveau des Waschwasser-Vorratsbehälters zurückläuft. Dadurch wird sowohl die Verzögerungszeit zwischen dem Einschalten des Waschbetriebs am Scheibenwischerschalter und dem Spritzbeginn als auch der Verschleiß der Scheibenwischer-Wischblätter durch Verkürzung der Trockenlaufdauer minimiert.

An das an den Bund 41 angelegte Ende des Schlauchstücks 42 ist ein Wulst 43 in der Art eines Rundschnurdichtrings einstückig angeformt. Beim Einstecken des Rohranschlußstutzens 30 in die Tunnelbohrung 26 wird der Wulst 43 des aufgezogenen Schlauchstücks 42 gegen eine querschnittsverengende umlaufende Stufe 44 der Tunnelbohrung 26 gedrückt und ist dann zwischen der Stufe 44 und dem Bund 41 eingespannt, wodurch sich zum einen für den Monteur eine Rückmeldung über das vollständige Einstecken ergibt und zum anderen auch eine Abdichtung eines jenseits der Durchtrittsöffnung 40 und des Schlauchstücks 42 gelegenen Hohlraums 45 gegenüber der Zulaufschlauchseite bewirkt wird. Auch dieser Hohlraum 45 ist ein Teil des Zulaufs der Spritzdüsen. In der erreichten Endstellung wird der Rohranschlußstutzen 30 mittels einer Klammer 46 formschlüssig gesichert, die durch eine Öffnung im Gehäuse 23 von oben her eingedrückt werden kann. Die Klammer 46 hat zwei Schenkel, die jeweils in einen durch einander gegenüberliegende Nuten 47 - außenseitig im Rohranschlußstutzen 30 - bzw. 48 - innenseitig in der Tunnelbohrung 26 - gebildeten Kanal eingesteckt werden und den Formschluß zwischen Rohranschlußstutzen 30 und Tunnelbohrung 26 herstellen.

Wie Figur 1 bereits zeigt, geht die Abdeckplatte 12 in ihrem der Windschutzscheibe 3 zugewandten Endbereich in einen von dem Hohlraum 45 sowie auch von dem Wärmeleiter 28 durchdrungenen, gebogenen Stirnbereich über, der sich eng an die windschutzscheibenseitige äußere Abschlußfläche des Versteifungsprofils 4 anlegt und somit auch noch für eine gewisse Abstützung des Halteteils 11 in Achsrichtung der Tunnelbohrung 26 bzw. des Hohlraums 45 sorgt.

Schließlich sind an dem von dem Rückschlagventil RV abgewandten Ende des Hohlraums 45 noch zwei Austrittsöffnungen 49 vorgesehen, in die außenseitig in bekannter Weise zur Richtungseinstellung der Waschflüssigkeitsstrahlen zwei kugelig geformte Spritzdüsen 50 schwenkbar eingepreßt sind.

## Patentansprüche

1. Scheibenwascheinrichtung mit einem zur Aufnahme wenigstens einer Spritzdüse mit einem Zulauf vorgesehenen, Halterungsmittel aufweisenden Halteteil zu deren Befestigung an einem Fahrzeug,
**dadurch gekennzeichnet,** daß das Halteteil (11)
- ein Gehäuse (23) mit einem einseitig offenen Kanal (24) zum Einführen einer Heizeinrichtung (37, 28) und mit einer Halterung (25) für ein in dem Zulauf der wenigstens einen Spritzdüse (50) vorzusehendes Rückschlagventil (RV) aufweist sowie
- zum Einsetzen in eine Ausnehmung (7) eines unterhalb der Außenhaut (1) des Fahrzeugs verlaufenden Versteifungsprofils (4) vorgesehen ist und diese Ausnehmung (7) in seiner durch die Halterungsmittel (13, 14, 19) fixierten Endmontagestellung vollständig abdeckt.

2. Scheibenwascheinrichtung nach Anspruch 1,
**dadurch gekennzeichnet,**
daß mit dem Halteteil (11) zur Abdeckung der Ausnehmung (7) eine nach außen hin glattwandige, auch das in der Endmontagestellung innerhalb der Ausnehmung (7) aufgenommene Gehäuse (23) abdeckende Abdeckplatte (12) einstückig ausgeformt ist.

3. Scheibenwascheinrichtung nach Anspruch 1 oder 2,
**dadurch gekennzeichnet,**
daß die Heizeinrichtung einen mit einem Heizelement (37) fest verbundenen und innerhalb des Gehäuses (23) außen an eine Wand des Zulaufs der wenigstens einen Spritzdüse (50) anlegbaren Wärmeleiter (28) umfaßt.

4. Scheibenwascheinrichtung nach Anspruch 1 oder 2 oder 3,
**dadurch gekennzeichnet,**
daß die Halterung (25) von dem Zulauf der wenigstens einen Spritzdüse (50) axial durchdrungen ist und mindestens eine Wand des Zulaufs bildet.

5. Scheibenwascheinrichtung nach Anspruch 4,
**dadurch gekennzeichnet,**
daß die Halterung (25) innerhalb des Gehäuses (23)
- koaxial zu dem U-förmigen Kanal (24) zum Einführen der Heizeinrichtung (37, 28) verläuft und von dessen Schenkeln an drei Wandseiten umgeben ist, wobei der Wärmeleiter (28) an die von ihr gebildeten Wände des Zulaufs außen anlegbar ist, und
- koaxial von einer einen Teil des Zulaufs der wenigstens einen Spritzdüse (50) bildenden Tunnelbohrung (26) durchdrungen ist, innerhalb deren das Rückschlagventil (RV) angeordnet ist.

6. Scheibenwascheinrichtung nach Anspruch 5,
**dadurch gekennzeichnet,**
daß der Wärmeleiter (28) einen U-förmig aus Blech gebogenen Querschnitt aufweist und mit seinen Schenkeln an drei Wandseiten der Halterung (25) eng anlegbar ist.

7. Scheibenwascheinrichtung nach Anspruch 3 oder 6,
**dadurch gekennzeichnet,**
- daß ein Gehäuseinnenteil (29) als in das Gehäuse (23) einsteckbarer Träger für die Heizeinrichtung und
- daß eine Rastverbindung (38) zur Sicherung der Einbaulage des Gehäuseinnenteils (29) mit der Heizeinrichtung innerhalb des Gehäuses (23) vorgesehen ist.

8. Scheibenwascheinrichtung nach einem der vorstehenden Ansprüche,
**dadurch gekennzeichnet,**
daß ein mit dem Rückschlagventil (RV) versehener Rohranschlußstutzen (30) des Zulaufs bis zu einem Anschlag (44) in die Halterung (25) einsteckbar und innerhalb der Halterung (25) durch eine Klammer (48) formschlüssig axial sicherbar sowie durch einen Dichtring abdichtbar ist.

9. Scheibenwascheinrichtung nach Anspruch 8,
**dadurch gekennzeichnet,**
daß der Dichtring durch einen Wulst (43) eines auf einen Endabschnitt (39) des Rohranschlußstutzens (30) bis zu einem Bund (41) aufgezogenen elastischen Schlauchstücks (42) gebildet ist, der nach dem vollständigen Einstecken des Rohranschlußstutzens (30) zwischen dem Bund (41) und dem Anschlag (44) eingespannt ist.

10. Scheibenwascheinrichtung nach Anspruch 9,
**dadurch gekennzeichnet,**
daß zur Bildung des Rückschlagventils (RV)
- die dem Endabschnitt (39) zugehörige Stirnseite des Rohranschlußstutzens (30) verschlossen und
- mindestens eine von dem elastisch aufweitbaren Schlauchstück (42) verschließbare, sich bei Druckbeaufschlagung vom Rohranschlußstutzen (30) her öffnende Durchtrittsöffnung (40) in der Mantelfläche des Endabschnitts (39) vorgesehen ist.

11. Scheibenwascheinrichtung nach Anspruch 8, 9 oder 10,
**dadurch gekennzeichnet,**
daß in den aus Kunststoff gefertigten Rohranschlußstutzen (30) ein Metallröhrchen (31) zur Verbesserung der Wärmeübertragung in Achsrichtung des Rohranschlußstutzens (30) eingesetzt ist.

12. Scheibenwascheinrichtung nach einem der vorstehenden Ansprüche,
**dadurch gekennzeichnet,**
daß das Halteteil (11) als Halterungsmittel einerseits wenigstens ein Einhängemaul (13) und andererseits federnde Rasthaken (14) aufweist, mittels deren es in der Ausnehmung (7) des Versteifungsprofils (4) verrastbar ist.

13. Scheibenwascheinrichtung nach Anspruch 12,
**dadurch gekennzeichnet,**
daß jedem Rasthaken (14) ein diesem gegenüberstehender Bock (17) zugeordnet ist und
daß nach dem Verrasten des Rasthakens (14) ein Ansatz (19) zwischen den Rasthaken (14) und den Bock (17) eintreibbar ist, der eine entrastende Rückbiegung des Rasthakens (14) verhindert.

14. Scheibenwascheinrichtung nach Anspruch 13,
**dadurch gekennzeichnet,**
daß der Ansatz (19) in einer Vormontagestellung mit dem Halteteil (11) über eine dünne Filmverbindung einstückig, jedoch lösbar verbunden ist.

15. Scheibenwascheinrichtung nach Anspruch 13 oder 14,
**dadurch gekennzeichnet,**
daß der Ansatz (19) in der eingetriebenen Stellung durch Formschluß fixiert ist.

16. Scheibenwascheinrichtung nach Anspruch 3 oder 6,
**dadurch gekennzeichnet,**
daß das Heizelement (37) aus flächigem, leitfähigem Material mit einem mit seiner Temperatur ansteigenden Widerstandskoeffizienten (PTC-Widerstand) besteht.

17. Scheibenwascheinrichtung nach Anspruch 16,
**dadurch gekennzeichnet,**
daß das Material des Heizelements (37) ein strahlungsvernetztes, elektrisch leitendes Polymer ist und auf beiden Seiten jeweils mit einer dünnen Elektrode ganzflächig laminiert ist.

18. Scheibenwascheinrichtung nach Anspruch 16,
**dadurch gekennzeichnet,**
daß das Heizelement (37) auf den Wärmeleiter (28) aufgeklebt ist.

19. Scheibenwascheinrichtung nach einem der vorstehenden Ansprüche,
**dadurch gekennzeichnet,**
daß das Gehäuse (23) mehrere Spritzdüsen (50) mit einem gemeinsamen Zulauf (26, 45) aufnimmt.

## Claims

1. Windscreen washing device, having a holding component with a means of fixing for the acceptance of at least one spray nozzle provided with an inlet, for fixing to a vehicle, characterised in that, the holding component (11)
- has a housing (23) with a duct (24) open on one side for inserting a heating device (37, 28) and has a mounting (25) for a holding valve (RV) provided in the inlet to at least one spray nozzle (50), and
- a recess (7) is provided in a stiffening profile (4) running under the outer skin (1) of the vehicle for insertion of the holding component and this recess (7) is completely covered in the final assembly position of the holding component when it is fixed by the means of fixing (13, 14, 19).

2. Windscreen washing device in accordance with Claim 1, characterised in that, a cover plate (12) is formed as one piece with the holding component (11) for covering the recess (7) wherein the cover plate (12) is smooth-sided on the outside and also when covering the installed housing (23) in its final assembly position within the recess (7).

3. Windscreen washing device in accordance with Claim 1 or 2, characterised in that, the heating device comprises a heat conductor (28) which is firmly fixed to a heating element (37) and which can be positioned inside the housing (23) and on the outside of one wall of the inlet to at least one spray nozzle (50).

4. Windscreen washing device in accordance with Claim 1 or 2 or 3, characterised in that, the mounting (25) of the inlet to at least one spray nozzle (50) is penetrated axially and forms at least one wall of the inlet.

5. Windscreen washing device in accordance with Claim 4, characterised in that, the mounting (25) within the housing (23)
- runs coaxially to the U-shaped duct (24) for the insertion of the heating device (37, 28) and is surrounded on three side walls by the legs of the duct, whereby the heat conductor (28) can be positioned on the outside of the walls of the inlet formed by the mounting, and
- is penetrated coaxially by a tunnel-shaped hole (26) which forms a part of the inlet to at least one spray nozzle (50) and within which the holding valve (RV) is located.

6. Windscreen washing device in accordance with Claim 5, characterised in that, the heat conductor (28) has a U-shaped cross-section bent from sheet metal and is positioned with its sides close to the three side walls of the mounting (25).

7. Windscreen washing device in accordance with Claim 3 or 6, characterised in that, there is provided
- an internal component of the housing (29) which can be inserted into the housing (23) as a support for the heating device, and
- a locking connection (38) to secure the fitting position of the internal component of the housing (29) with the heating device within the housing (23).

8. Windscreen washing device in accordance with one of the preceding Claims, characterised in that, a pipe connection fitting (30) of the inlet provided with the holding valve (RV) can be inserted as far as a stop (44) in the mounting (25) and can be positively secured axially within the mounting (25) by a clip (48) and can be sealed by a sealing ring.

9. Windscreen washing device in accordance with Claim 8, characterised in that, the sealing ring is formed by a bead (43) on an elastic piece of tubing (42) drawn over an end section (39) of the pipe connection fitting (30) as far as a collar (41), wherein the bead is compressed between the collar (41) and the stop (44) after complete insertion of the pipe connection fitting (30).

10. Windscreen washing device in accordance with Claim 9, characterised in that, to form the holding valve (RV)
- the endface of the pipe connection fitting (30) adjoining the end section (39) is closed, and
- there is provided in the outer surface of the end section (39) at least one through-hole (40) which can be closed by the extensible elastic piece of tubing (42) and which can be opened by the application of pressure from the pipe connection fitting (30).

11. Windscreen washing device in accordance with Claim 8 or 9 or 10, characterised in that, a metal tube (31) is inserted into the pipe connection fitting (30) made from plastic in order to improve the heat transfer in the axial direction of the pipe connection fitting (30).

12. Windscreen washing device in accordance with one of the preceding Claims, characterised in that, as a means of fixing the holding component (11) has at least one securing jaw (13) at one side and sprung locking hooks (14) at the other side, by which means it can be locked into the recess (7) in the stiffening profile (4).

13. Windscreen washing device in accordance with Claim 12, characterised in that, a lug (17) is arranged opposite each locking hook (14), and that after engagement of the locking hook (14) a projection (19) can be driven in between the locking hook (14) and the lug (17) which prevents the locking hook (14) from bending back again and unlocking.

14. Windscreen washing device in accordance with Claim 13, characterised in that, in the pre-assembly condition the projection (19) is connected as one piece to the holding component (11) by a thin film connection which can however be broken.

15. Windscreen washing device in accordance with Claim 13 or 14, characterised in that, in the driven-in position the projection (19) is fixed by form closure.

16. Windscreen washing device in accordance with Claim 3 or 6, characterised in that, the heating element (37) consists of flat electrically-conducting material with a resistance coefficient which rises with its temperature (PTC-resistance).

17. Windscreen washing device in accordance with Claim 16, characterised in that, the material of the heating element (37) is an electrically-conducting polymer which has been cross-linked by radiation and which is laminated to a thin electrode over the whole surface on each side.

18. Windscreen washing device in accordance with Claim 16, characterised in that, the heating element (37) is stuck to the heat conductor (28).

19. Windscreen washing device in accordance with one of the preceding Claims, characterised in that, the housing (23) accepts several spray nozzles (50) with a common inlet (26, 45).

## Revendications

1. Dispositif de lavage de pare-brise, avec une partie de maintien, pour sa fixation sur un véhicule, présentant une partie de fixation et prévue pour recevoir au moins une buse de projection avec une alimentation,
caractérisé en ce que la partie de maintien (11)
- présente un boîtier (23), avec un canal (24) ouvert d'un côté, pour introduire un dispositif chauffant (37, 28), et avec une fixation (25) pour un clapet anti-retour (RV), à prévoir dans l'alimentation d'au moins une buse de projection (50), et
- est prévue pour être inserée dans un évidement (7) d'un profilé de raidissement (4), s'étendant au-dessous de la surface extérieure (1) du véhicule et couvre complètement cet évidement (7), dans sa position de montage final, fixée à l'aide des moyens de fixation (13, 14, 19).

2. Dispositif de lavage de pare-brise selon la revendication 1, caractérisé en ce qu'avec la partie de maintien (11) destinée au recouvrement de l'évidement (7) est formée, d'un seul tenant, une plaque de recouvrement (12) à parois lisses du côté extérieur, recouvrant également le boîtier (23) logé à l'intérieur de l'évidement (7) dans la position de montage final.

3. Dispositif de lavage de pare-brise selon la revendication 1 ou 2, caractérisé en ce que le dispositif chauffant comprend un conducteur de chaleur (28), relié rigidement à un élément chauffant (37) et susceptible d'être appliqué à l'intérieur du boîtier (23), extérieurement, sur une paroi de l'alimentation d'au moins une buse de projection (50).

4. Dispositif de lavage de pare-brise selon la revendication 1 ou 2 ou 3, caractérisé en ce que la fixation (25) est traversée axialement par l'alimentation d'au moins une buse de projection (50) et constitue au moins une paroi de l'alimentation.

5. Dispositif de lavage de pare-brise selon la revendication 4, caractérisé en ce qu'à l'intérieur du boîtier (23), la fixation (25)
- s'étend coaxialement par rapport au canal en U (24) destiné à l'insertion du dispositif chauffant (27, 28) et est entourée par ses branches sur trois côtés de parois, le conducteur de chaleur (28) étant susceptible d'être appliqué depuis l'extérieur sur la paroi d'alimentation qu'elle forme et
- est traversé coaxialement par un perçage en tunnel (26), constituant une partie de l'alimentation de la au moins une buse de projection (50) et à l'intérieur duquel est disposé le clapet anti-retour (RV).

6. Dispositif de lavage de pare-brise selon la revendication 5, caractérisé en ce que le conducteur de chaleur (28) présente une section transversale réalisée en tôle repliée en U et peut être étroitement appliqué par ses branches sur trois côtés de paroi de la fixation (25).

7. Dispositif de lavage de pare-brise selon la revendication 3 ou 6, caractérisé en ce qu'
- est prévue une partie intérieure de boîtier (29) faisant office de support, enfichable dans le boîtier (23), pour le dispositif chauffant, et
- est prévue une liaison à cliquet (38), pour assurer la fixation de la position de montage de la partie intérieure de boîtier (29) au dispositif chauffant, à l'intérieur du boîtier (23).

8. Dispositif de lavage de pare-brise selon l'une des revendications précédentes, caractérisé en ce qu'une tubulure de raccordement de tube (30), pourvue du clapet anti-retour (RV), de l'alimentation peut être enfichée dans la fixation (25) jusqu'à venir sur une butée (44) et peut être fixée axialement, avec ajustement de forme, à l'intérieur de la fixation (25), au moyen, d'un crampon (48), et peut être isolée de façon étanche au moyen d'une bague d'étanchéité.

9. Dispositif de lavage de pare-brise selon la revendication 8, caractérisé en ce que la bague d'étanchéité est constituée par un bourrelet (43) d'une pièce de tuyau (42) élastique tirée jusqu'à une collerette (41), sur un tronçon d'extrémité (39) de la tubulure de raccordement de tube (30), pièce de tuyau (42) enserrée entre la collerette (41) et la butée (44), après enfichage complet de la tubulure de raccordement de tube (30).

10. Dispositif de lavage selon la revendication 9, caractérisé en ce que, pour constituer le clapet anti-retour (RV),
- la face frontale, appartenant au tronçon d'extrémité (39), de la tubulure de raccordement de tube (30) est obturée, et
- au moins une ouverture de passage (40), pouvant être fermée par la pièce de tuyau (42) susceptible d'être agrandie élastiquement, s'ouvrant en cas de sollicitation par une pression venant de la tubulure de raccordement de tuyau (30), est prévue dans la surface d'enveloppe du tronçon d'extrémité (39).

11. Dispositif de lavage de pare-brise selon la revendication 8, 9, ou 10, caractérisé ce qu'un petit tube métallique (31), destiné à améliorer le transfert thermique dans la direction axiale de la tubulure de raccordement de tube (30), est inséré dans la tubulure de raccordement de tube (30) fabriquée en matière synthétique.

12. Dispositif de lavage de pare-brise selon l'une des revendications précédentes, caractérisé en ce que la partie de maintien (11) présente, à titre de moyen de fixation, d'une part, au moins une bouche d'accrochage (13) et, d'autre part, des crochets d'encliquetage (14) élastiques, au moyen desquels elle peut être encliquetée dans l'évidement (7) du profilé de raidissement (4).

13. Dispositif de lavage de pare-brise selon la revendication 12, caractérisé en ce qu'à chaque crochet d'encliquetage (14) est associé un bloc (17) placé en regard de celui-ci et en ce que, après encliquetage du crochet d'encliquetage (14), un appendice (19) peut être enfoncé entre le crochet d'encliquetage (14) et le bloc (17) et empêcher tous rappel par flexion, produisant une désolidarisation, du crochet d'encliquetage (14).

14. Dispositif de lavage de pare-brise selon la revendication 13, caractérisé en ce que, dans une position de pré-montage, l'appendice (19) est relié de façon à constituer une seule pièce, tout en étant désolidarisable, avec la partie de maintien (11), par l'intermédiaire d'une liaison par film mince.

15. Dispositif de lavage de pare-brise selon la revendication 13 ou 14, caractérisé en ce que l'appendice (19) est fixé par ajustement de forme, une fois situé dans la position enfoncée.

16. Dispositif de lavage de pare-brise selon la revendication 3 ou 6, caractérisé en ce que l'élément chauffant (37) est en un matériau plat, conducteur, avec un coefficient de résistance augmentant lorsque la température augmente (résistance de type PTC).

17. Dispositif de lavage de pare-brise selon la revendication 16, caractérisé en ce que le matériau de l'élément chauffant (37) est un polymère conducteur de l'électricité, réticulé par irradiation et laminé avec une électrode mince sur la totalité de l'aire de chacune de ses deux faces.

18. Dispositif de lavage de pare-brise selon la revendication 16, caractérisé en ce que l'élément chauffant (37) est collé sur le conducteur de chaleur (28).

19. Dispositif de lavage de pare-brise selon l'une des revendications précédentes, caractérisé en ce que le boîtier (23) reçoit plusieurs buses de projection (50) avec une alimentation (26, 45) commune.
